# EUROPÄISCHE PATENTANMELDUNG

(11) **EP 2 270 060 A1**
(43) Veröffentlichungstag der Anmeldung: **05.01.2011**
(21) Anmeldenummer: 10005940.1
(22) Anmeldetag: 09.06.2010
(51) Int. Cl.: C08G 18/10, C08G 18/12, C08G 18/40, C08G 18/48, C08G 18/61, C08G 18/75, C09J 175/04

(54) **Feuchtehärtbarer Polyurethanklebstoff**

(30) Priorität: 10.06.2009 DE 102009025944
(71) Anmelder: Kömmerling Chemische Fabrik GmbH & Co., 66954 Pirmasens (DE)
(72) Erfinder: Schott, Norbert, 66482 Zweibrücken (DE); Wittwer, Wolfgang, 66953 Pirmasens (DE); Backes, Timo, 66839 Schmelz (DE)
(74) Vertreter: Vièl, Christof

(57) **Zusammenfassung**

Die Erfindung betrifft einen feuchtehärtbaren Polyurethanklebstoff, insbesondere für Kunststoffe wie Polystyrol (PS), Acrylnitril-Butadien-Styrol-Copolymerisate (ABS), Styrol-Acrylnitril (SAN), Polycarbonat (PC), Polyvinylchlorid (PVC) und Polymethylmethacrylat (PMMA).

Um einen derartigen Polyurethanklebstoff zu finden, der ohne Vorbehandlung auf verschiedenen Kunststoffen wie Acrylnitril-Butadien-Styrol-Copolymerisate (ABS), Polystyrol (PS), Styrol-Acrylnitril (SAN), Polycarbonat (PC), Polymethylmethacrylat (PMMA) oder hartem Polyvinylchlorid (PVC-U), eine gute Adhäsion zeigt und keine Spannungsrisse in den Substraten erzeugt, wird im Rahmen der Erfindung vorgeschlagen, daß der Polyurethanklebstoff aus einem Polyurethanpräpolymer hergestellt ist, das durch chemische Verbindung mindestens eines Polyols mit einem Isocyanat hergestellt ist, wobei das Polyol zu 70 bis 100 Gew.% aus mindestens einem bifunktionellen oder höherfunktionellen carbinolterminierten Polydialkyl-, Polydiaryl- oder Polyalkylarylsiloxan und zu 0 bis 30 Gew.% aus mindestens einem bifunktionellen oder höherfunktionellen Polyether oder Polyester besteht und das Isocyanat zumindest bifunktionell ist.

Der feuchtehärtbare Kleb- bzw. Dichtstoff gemäß der vorliegenden Erfindung ist bei Raumtemperatur applizierbar, lösemittelfrei, fugenfüllend und überlackierbar. Er kann ohne Vorbehandlung wie beispielsweise Primern verklebt werden, ohne daß Spannungsrisse in den Substraten auftreten.

## Beschreibung

Die Erfindung betrifft einen feuchtehärtbaren Polyurethanklebstoff, insbesondere für Kunststoffe wie Polystyrol (PS), Acrylnitril-Butadien-Styrol-Copolymerisate (ABS), Styrol-Acrylnitril (SAN), Polycarbonat (PC), Polyvinylchlorid (PVC) und Polymethylmethacrylat (PMMA).

Wie aus Müller, Bodo; Rath, Walter; "Formulierung von Kleb- und Dichtstoffen"; Hannover: Vincentz Network, 2004 (Coatings Compendien); ISBN: 3-87870-791-6 hervorgeht, haben lösemittelhaltige Kontaktklebstoffe den Nachteil, daß sie nicht fugenfülllend sind und an den Substraten Spannungsrisse verursachen.

1-K-PUR-Klebstoffe und silanisierte Polyether besitzen bezüglich der Verklebung von verschiedenen Kunststoffen den Nachteil, daß erst nach einem Primer-Auftrag Haftung auf den jeweiligen Substraten erzielt werden kann. Außerdem können durch die enthaltenen Weichmacher, Lösemittel oder Stabilisatoren Spannungsrisse entstehen.

Aus der DE 10 2004 055 450 A1 ist ein Verfahren bekannt, in dem Polyurethan-Präpolymere mit terminalen Isocyanatgruppen durch Umsetzung eines Überschusses eines Isocyanats mit α,ω,-OH-Polydiorganosiloxanen hergestellt werden sollen. Da die chemische Bindung des Silanol-Isocyanat-Additionsproduktes aufgrund der bekannten hohen Hydrolyseempfindlichkeit der O-Silylurethanbindung instabil ist, kommt dieses Verfahren für einen technisch anspruchsvollen Klebstoff nicht in Frage.

Die DE 103 28 844 A1 beschreibt die Präpolymerherstellung unter Zusatz von niedermolekularem Alkohol mit einem Molekulargewicht von 62 bis 300 g/mol. Unter Zusatz von niedermolekularem Alkohol mit einem Molekulargewicht bis 300 g/mol kann jedoch keine ausreichende Haftung auf Kunststoffen erreicht werden.

Aufgabe der Erfindung ist es daher, einen Polyurethanklebstoff zu schaffen, der ohne Vorbehandlung auf verschiedenen Kunststoffen wie Acrylnitril-Butadien-Styrol-Copolymerisate (ABS), Polystyrol (PS), Styrol-Acrylnitril (SAN), Polycarbonat (PC), Polymethylmethacrylat (PMMA) oder hartem Polyvinylchlorid (PVC-U), die mit herkömmlichen Klebstoffen nur schwierig zu verkleben sind, eine gute Adhäsion zeigt und keine Spannungsrisse in den Substraten erzeugt.

Diese Aufgabe wird erfindungsgemäß dadurch gelöst, daß der Polyurethanklebstoff aus einem Polyurethanpräpolymer hergestellt ist, das durch chemische Verbindung mindestens eines Polyols mit einem Isocyanat hergestellt ist, wobei das Polyol zu 70 bis 100 Gew.-% aus mindestens einem bifunktionellen oder höherfunktionellen carbinolterminierten Polydialkyl-, Polydiaryl- oder Polyalkylarylsiloxan und zu 0 bis 30 Gew.-% aus mindestens einem bifunktionellen oder höherfunktionellen Polyether oder Polyester besteht und das Isocyanat zumindest bifunktionell ist.

Zur Herstellung eines entsprechenden Polyurethanklebstoffs basierend auf einem Polyurethanpräpolymer, welches durch Zugabe von Füllstoffen in eine passende Formulierung überführt werden kann wurde im Rahmen der Erfindung ein Polyurethanpräpolymer gesucht,
- das funktionelle Gruppen besitzt, die mit Luftfeuchtigkeit miteinander vernetzen,
- das über eine hinreichend gute Durchhärtungsgeschwindigkeit verfügt,
- das demnach eine ähnliche Oberflächenspannung wie die zu verklebenden Kunststoffsubstrate aufweist,
- das eine gute Benetzung der Substratoberflächen zeigt,
- das lösemittelfrei ist,
- das fugenfüllend ist, das bei Raumtemperatur applizierbar ist.

Im zweiten Schritt wurde aus dem Polyurethanpräpolymer unter Zugabe von Füllstoffen, wie Kreide, Kieselsäure oder Ruß eine Formulierung hergestellt,
- die mit Hilfe von Luftfeuchtigkeit blasen- und schaumfrei aushärtet,
- welche die Anforderungen hinsichtlich Haftung und mechanischer Eigenschaften an einen Klebstoff erfüllt,
- die demnach eine ähnliche Oberflächenspannung wie die zu verklebenden Kunststoffsubstrate aufweist,
- die eine gute Benetzung der Substratoberflächen zeigt,
- die je nach Füllstoffart und -anteil leicht selbstverlaufend bis nahezu standfest eingestellt werden kann,
- die keine Spannungsrisse an den zu verklebenden Substraten erzeugt,
- die überlackierbar ist,
- deren Aushärteprodukt eine gute Dehnbarkeit besitzt,
- deren Aushärteprodukt hochelastisch ist.

Es konnten im Rahmen der Erfindung Polyurethanpräpolymere gefunden werden, welche Adhäsion auf verschiedenen Kunststoffsubstrat-Oberflächen besitzen. Es handelt sich bei diesen Präpolymeren um polyurethanbasierte Präpolymere, die entweder isocyanatterminiert oder silanterminiert hergestellt werden können.

Der feuchtehärtbare Kleb- bzw. Dichtstoff gemäß der vorliegenden Erfindung ist bei Raumtemperatur applizierbar, lösemittelfrei, fugenfüllend und überlackierbar. Er kann ohne Vorbehandlung wie beispielsweise Primern verklebt werden; ohne daß Spannungsrisse in den Substraten auftreten.

Um ein geeignetes Fließverhalten bzw. thixotrope Eigenschaften zu erhalten, kann das Polyurethanpräpolymer mit Hilfe bekannter Methoden entsprechend formuliert werden.

Eine bevorzugte Ausgestaltung der Erfindung besteht darin, daß das Molekulargewicht des bzw. der bifunktionellen oder höherfunktionellen carbinol-funktionalisierten Polydialkyl-, Polydiaryl- oder Polyalkylarylsiloxane 10.000 bis 12.000 g/mol beträgt.

Das bzw. die bifunktionellen oder höherfunktionellen carbinol-funktionalisierten Polydialkyl-, Polydiaryl- oder Polyallcylarylsiloxane werden nachfolgend als Silikonfluid bezeichnet.

Es ist zur Erfindung gehörig, daß das Molekulargewicht der bifunktionellen oder häherfunktionellen Polyether oder Polyester zwischen 300 und 12.000 g/mol, bevorzugt zwischen 2.000 und 6.000 g/mol beträgt.

Erfindungsgemäß ist vorgesehen, daß das Isocyanat ausgewählt ist aus der Gruppe der aliphatischen Isocyanate, insbesondere Isophorondiisocyanat (IPDI), Tetramethylxylylendiisocyanat (TMXDI), Hexamethylendiisocyanat, Dicyclohexylmethandiisocyanat (H12-MDI) oder aus der Gruppe der aromatischen Isocyanate, insbesondere Diphenylmethandiisocyanat (MDI), und deren Derivaten, Toluylendiisocyanat (TDI), sowie Dimeren, Trimeren, Biureten aller dieser Isocyanate oder Mischungen hiervon.

Eine bevorzugte Ausführung der Erfindung besteht darin, daß das Polyurethanpräpolymer der isocyanatterminierten Variante aus carbinol-funktionalisiertem difunktionellem Silikonfluid und Isophorondiisocyanat (IPDI) aufgebaut ist.

Als Hauptpolyol-Komponente dient ein difunkrionelles, carbinol-terminiertes Silikonfluid. Als Isocyanat kommt bei beiden Syntheserouten bevorzugt Isophorondiisocyanat zum Einsatz.

Im Rahmen der Erfindung liegt auch ein Verfahren zum Herstellen eines feuchtehärtbaren Polyurethanklebstoffs, wobei
a) das Polyurethanpräpolymer durch Umsetzung der Polyole mit einem stöchiometrischen Überschuß an Isocyanaten isocyanatterminiert (NCO/OII>1) vorliegt, oder
b) das Polyurethanpräpolymer durch Umsetzung der Polyole mit einem stöchiometrischen Überschuß an Isocyanaten zunächst isocyanatterminiert (NCO/OH>1) gefertigt und anschließend durch Umsetzung mit Aminoalkoxysilanen silanterminiert vorliegt, oder
c) das Polyurethanpräpolymer durch Umsetzung der Polyole mit einem stöchiometrischen Unterschuß an Isocyanaten zunächst mit endständigem Zerewitinoff-aktiven Wasserstoffen, insbesondere hydroxylterminiert (NCO/OH<1) gefertigt und anschließend durch Umsetzung mit Isocyanatoalkoxysilanen silanterminiert vorliegt.

Es ist hierbei erfindungsgemäß, daß
a) silanterminierte Polyurethanpräpolymere, die durch Umsetzung von zunächst isocyanatterminierten Präpolymeren mit Aminosilanen hergestellt werden, in einem Verhältnis NCO/OH>2 aufgebaut sind und daß b) silanterminierte Polyurethanpräpolymere, die durch Umsetzung von zunächst mit endständigen Zerewitinoff-aktiven Wasserstoffen terminieren, insbesondere hydroxylterminierte Polyurethanpräpölymere, mit Isocyantosilanen hergestellt werden, die in einem Verhältnis OH/NCO>2 aufgebaut sind.

Ebenso ist im Rahmen der Erfindung vorgesehen, daß zur Herstellung von silanterminierten Polyurethanpräpolymeren sowohl di- und trifunktionelle γ-Silane als auch di- und trifunktionelle α-Silane oder auch Mischungen hiervon eingesetzt werden.

Nachfolgend wird die Erfindung anhand von Ausführungsbeispielen näher erläutert.

### I 1. Herstellung eines isocyanatterminierten Präpolymers:

Zur Herstellung eines isocyanatterminierten Präpolymers wird als Polyol-Komponente hauptsächlich ein difunktionelles, carbinol-terminiertes Silikonfluid eingesetzt. Als weitere Polyole können Polyether, Polyester oder andere carbinol-terminierte Silikonfluide, auch höherwertige oder mit anderen Molekulargewichten, zugesetzt werden. Der Aufbau des isocyanatterminierten Präpolymers erfolgt bevorzugt mit Isophorondiisocyanat (IPDI). Allerdings können auch andere aliphatische Isocyanate wie Hexamethylendiisocyanat (HDI), Dicyclohexylmethandiisocyanat (H12-MDI), Tetramethylxylylendiisocyanat (TMXDI), wie auch aromatische Isocyanate wie Diphenylmethandiisocyanat (MDI) und deren Derivate, insbesondere deren uretonimin- und polyolformulierte Derivate, oder Toluylendiisocyanat (TDI) eingesetzt werden. Dazu zählen auch Dimere, Trimere oder Biurete aller dieser Isocyanate oder auch Mischungen.

Die resultierende Präpolymer-Formulierung zeigt besonders gute Haftung auf Polystyrol (PS), Acrylnitril-Butadien-Styrol-Copolymerisate (ABS), beschichtetem und unbeschichtetem Polycarbonat (PC) und Polymethylmethacrylat (PMMA).

### I 2. Rezeptur einer isocyanatterminierten Formulierung:

| | |
|---|---|
| Silikonfluid | 633,40 g |
| Kreide | 250,00 g |
| Kieselsäure | 60,00 g |
| Isophorondiisocyanat | 49,30 g |
| Dibutylzinndilaurat | 2,00 g |
| Dibutylzinnacetylacetonat (30 %ig in Weichmacher) | 5,00 g |
| Benzoylchlorid (33 %ig in Weichmacher) | 0,30 g |

### I 3. Arbeitsvorschrift:

An einem Dissolver wird die Kieselsäure in das Gemisch aus Silikonfluid und Kreide 3 min eingeschert. Anschließend wird die Mischung in einem geschlossenen 2-1-Rührgefäß 1 h bei 100°C und 50 mbar getrocknet. Nach Abkühlen auf 80°C wird das Isocyanat zugegeben und auf 90°C bei 50 mbar erhitzt. Sobald das Gemisch 90°C erreicht, wird ein Teil des DBTL zugetropft, bis die Reaktion langsam anspringt (exotherme Reaktion). Anschließend wird die Mischung weitere 3 h bei 90°C und 50 mbar gerührt. Abschließend erfolgt die Zugabe der restlichen Katalysatormengen und des Benzoylchlorids.

### I 4. Eigenschaften:

Die weiße, schwach thixotrope Masse hat eine Viskosität von 115.000 mPas.

### II 1. Herstellung eines silanterminierten Präpolymers:

Bei der Herstellung eines silanterminierten Präpolymers kommt als Hauptpolyol-Komponente bevorzugt ein difunktionelles, carbinol-terminiertes Silikonfluid zum Einsatz. Als weitere Polyole können Polyether, Polyester oder andere carbinol-terminierte Silikonfluide, auch höherwertige oder mit anderen Molekulargewichten, zugesetzt werden. Bei der silanterminierten Variante werden bessere Ergebnisse bzgl. Haftung und Mechanik erzielt, wenn zum Silikonfluid ca. 5 % Polyetherpolyol zugegeben werden. Zum Präpolymer-Aufbau wird als Isocyanat bevorzugt Isophorondiisocyanat (IPDI) verwendet, da mit IPDI die besten Ergebnisse in Bezug auf Haftung und Mechanik erreicht werden. Es können auch andere aliphatische Isocyanate wie Hexamethylendiisocyanat (HDI), Dicyclohexylmethandiisocyanat (H12-MDI), Tetramethylxylylendiisocyanat (TMXDI), wie auch aromatische Isocyanate wie Diphenylmethandiisocyanat (MDI) und deren Derivate, insbesondere deren uretonimin- und polyolformulierte Derivate, oder Toluylendiisocyanat (TDI) eingesetzt werden. Dazu zählen auch Dimere, Trimere oder Biurete aller dieser Isocyanate oder auch Mischungen hiervon.

Der Präpolymer-Aufbau kann sowohl NCO-terminiert als auch hydroxyl-terminiert durchgeführt werden. NCO-terminierte Präpolymere werden mit Aminosilanen, Hydroxylterminierte Präpolymere mit Isocyanatosilanen zu den entsprechenden silanterminierten Präpolymeren umgesetzt. Bei ersterem Weg werden für den Präpolymer-Aufbau mit einem NCO/OH-Verhältnis = 3 gute Ergebnisse erzielt, ein kleineres Verhältnis führt zu schlechteren mechanischen Eigenschaften. Der Umsatz mit Silanen wird mit einem Überschuss von 4% Silan durchgeführt, um einen vollständigen Umsatz zu gewährleisten.

Als Silane können sowohl di- bzw. trifunktionelle γ-Sliane als auch di- bzw. trifunktionelle α-Silane eingesetzt werden. Bevorzugt kommen difunktionelle α Silane zum Einsatz, da sie zu guten mechanischen Eigenschaften bei gleichzeitig hoher Dehnung führen. Außerdem benötigen sie zur Aushärtung nur geringe Mengen an Katalysator.

Die rheologischen Eigenschaften können mit Hilfe bekannter Methoden entsprechend eingestellt werden. Ein zunehmender Kreideanteil führt zu besseren mechanischen Eigenschaften bei zunehmender Dehnbarkeit.

Die resultierende Präpolymer-Formulierung zeigt besonders gute Haftung auf Polystyrol (PS), Acrylnitril-Butadien-Styrol-Copolymerisate (ABS), beschichtetem und unbeschichtetem Polycarbonat (PC), Polyvinylchlorid (PVC) und Polymethylmethacrylat (PMMA).

### II 2. Rezeptur einer silanterminierten Formulierung:

| | |
|---|---|
| Silikonfluid | 459,00 g |
| Polyetherpolyol | 51,00 g |
| Kreide | 400,00 g |
| Isophorondiisocyanat | 35,81 g |
| Dibutylzinndilaurat (20%ig in Weichmacher) | 0,15 g |
| α-Aminosilan | 54,04 g |

### II 3. Arbeitsvorschrift:

An einem Dissolver wird die Kreide in das Gemisch aus Silikonfluid und Polyether 3 min eingeschert. Anschließend wird die Mischung in einem geschlossenen 2-1-Rührgefäß 1 h bei 100°C und 50 mbar getrocknet. Nach Abkühlen auf 80°C wird das Isocyanat zugegeben und auf 90°C bei 50 mbar erhitzt. Sobald das Gemisch 90°C erreicht, wird das DBTL zugetropft, bis die Reaktion langsam anspringt (exotherme Reaktion). Anschließend wird die Mischung weitere 3 h bei 90°C und 50 mbar gerührt. Nach dem Abkühlen auf 50°C wird das - Aminosilan zugegeben und das Reaktionsgemisch 1 h bei 50°C und 50 mbar gemischt.

### II 4. Eigenschaften:

Die weiße, thixotrope Masse hat eine Viskosität von 600.000 mPas.

## Patentansprüche

1. Feuchtehärtbarer Polyurethanklebstoff, insbesondere für Kunststoffe wie Polystyrol (PS), Acrylnitril-Butadien-Styrol-Copolymerisate (ABS), Styrol-Acrylnitril (SAN), Polycarbonat (PC), Polyvinylchlorid (PVC) und Polymethylmethacrylat (PMMA), **dadurch gekennzeichnet, daß** der Polyurethanklebstoff aus einem Polyurethanpräpolymer hergestellt ist, das durch chemische Verbindung mindestens eines Polyols mit einem Isocyanat hergestellt ist, wobei das Polyol zu 70 bis 100 Gew.-% aus mindestens einem bifunktionellen oder höherfunktionellen carbinolterminierten Polydialkyl-, Polydiaryl- oder Polyalkylarylsiloxan und zu 0 bis 30 Gew.-% aus mindestens einem bifunktionellen oder höherfunktionellen Polyether oder Polyester besteht und das Isocyanat zumindest bifunktionell ist.

2. Feuchtehärtbarer Polyurethanklebstoff gemäß Anspruch 1, **dadurch gekennzeichnet, daß** das Molekurlargewicht des bzw. der bifunktionellen oder höherfunktionellen carbinol-funktionalisierten Polydialkyl-, Polydiaryl- oder Polyalkylarylsiloxane 10.000 bis 12.000 g/mol beträgt

3. Feuchtehärtbarer Polyurethanklebstoff gemäß einem der Ansprüche 1 oder 2, **dadurch gekennzeichnet, daß** das Molekulargewicht des bzw. der bifunktionellen oder höherfunktionellen Polyether oder Polyester zwischen 300 und 12.000 g/mol, bevorzugt zwischen 2.000 und 6.000 g/mol, besonders bevorzugt 4.000 g/mol beträgt.

4. Feuchtehärtbarer Polyurethanklebstoff gemäß Anspruch 1, **dadurch gekennzeichnet, daß** das Isocyanat ausgewählt ist aus der Gruppe der aliphatischen Isocyanate, insbesondere Isophorondiisocyanat (IPDI), Tetramethylxylylendiisocyanat (TMXDI), Hexamethylendiisocyanat, Dicyclohexylmethandiisocyanat (H12-MDI) oder aus der Gruppe der aromatischen Isocyanate, insbesondere Diphenylmethandiisocyanat (MDI), und deren Derivaten, Toluylendiisocyanat (TDI), sowie Dimeren, Trimeren, Biureten aller dieser Isocyanate oder Mischungen hiervon.

5. Feuchtehärtbarer Polyurethanklebstoff gemäß Anspruch 1, **dadurch gekennzeichnet, daß** das Polyurethanpräpolymer der isocyanatterminierten Variante aus catbinol-funktionalisiertem difunktionellem Silikonfluid und Isophorondiisocyanat (IPDI) aufgebaut ist.

6. Verfahren zum Herstellen eines feuchtehärtbaren Polyurethanklebstoffs gemäß den Ansprüchen 1 bis 5, **dadurch gekennzeichnet, daß**
a) das Polyurethanpräpolymer durch Umsetzung der Polyole mit einem stöchiometrischen Überschuß an Isocyanaten isocyanatterminiert (NCO/OII>1) vorliegt, oder
b) das Polyurethanpräpolymer durch Umsetzung der Polyole mit einem stöchiometrischen Überschuß an Isocyanaten zunächst isocyanatterminiert (NCO/OH>1) gefertigt und anschließend durch Umsetzung mit Aminoalkoxysilanen silanterminiert vorliegt, oder
c) das Polyurethanpräpolymer durch Umsetzung der Polyole mit einem stöchiometrischen Unterschuß an Isocyanaten zunächst mit endständigem Zerewitinoff-aktiven Wasserstoffen, insbesondere hydroxylterminiert (NCO/OH<1) gefertigt und anschließend durch Umsetzung mit Isocyanatoalkoxysilanen silanterminiert vorliegt.

7. Verfahren gemäß Anspruch 6, **dadurch gekennzeichnet, daß**
a) silanterminierte Polyurethanpräpolymere, die durch Umsetzung von zunächst isocyanatterminierten Präpolymeren mit Aminosilanen hergestellt werden, in einem Verhältnis NCO/OH>2 aufgebaut sind und daß
b) silanterminierte Polyurethanpräpolymere, die durch Umsetzung von zunächst mit endständigen Zerewitinoff-aktiven Wasserstoffen terminieren, insbesondere hydroxylterminierte Präpolymere, mit Isocyantosilanen hergestellt werden, die in einem Verhältnis OH/NCO>2 aufgebaut sind.

8. Verfahren gemäß einem der Ansprüche 6 oder 7, **dadurch gekennzeichnet, daß** zur Herstellung von silanterminierten Polyurethanpräpolymeren sowohl di- und trifunktionelle γ-Silane als auch di- und trifunktionelle α-Silane oder auch Mischungen hiervon eingesetzt werden.
